Europäisches Patentamt

(19) European Patent Office  (11) Veröffentlichungsnummer: **0 098 490**

Office européen des brevets  **B1**

(12) **EUROPÄISCHE PATENTSCHRIFT**

(45) Veröffentlichungstag der Patentschrift:
25.01.89

(21) Anmeldenummer: 83106217.9

(22) Anmeldetag: 25.06.83

(51) Int. Cl.⁴: **D 21 C 1/02,** C 13 K 13/00,
C 08 H 5/02, C 08 B 37/14

(54) Verfahren und Vorrichtung zur Gewinnung von Cellulose, einfachen Zuckern und löslichen Ligninen aus pflanzlicher Biomasse.

(30) Priorität: 05.07.82 DE 3225074
05.01.83 DE 3300726

(43) Veröffentlichungstag der Anmeldung:
18.01.84 Patentblatt 84/3

(45) Bekanntmachung des Hinweises auf die Patenterteilung:
25.01.89 Patentblatt 89/4

(84) Benannte Vertragsstaaten:
AT BE CH DE FR GB IT LI LU NL SE

(56) Entgegenhaltungen:
AT-B-263 661
DE-A-1 216 810
FR-A-381 462

BULLETIN OF THE INSTITUTE OF PAPER
CHEMISTRY, Vol. 54, nr. 9. März 1984,
Zusammenfassung 9660 (M), APPLETON,
WISCONSIN (US); CONCIN et al.:
"Hydrothermolysis - A new way for production of
pulp", Int. Symp. Wood & Pulping Chem. (Japan),
Vol. 2: 1-4 (Mai 23-27, 1983 (Engl.)

Die Akte enthält technische Angaben, die nach
dem Eingang der Anmeldung eingereicht wurden
und die nicht in dieser Patentschrift enthalten sind.

(73) Patentinhaber: ERNE FITTINGS Gesellschaft
m.b.H. & Co., A-6824 Schlins (AT)

(72) Erfinder: Concin, Roland, Mariahilfpark 2/907,
A-6020 Innsbruck (AT)
Erfinder: Bobleter, Ortwin, Achselkopfweg 10,
A-6020 Innsbruck (AT)
Erfinder: Binder, Hanno, Schallerweg 8, A-6060 Mils
(AT)
Erfinder: Schwald, Wolfgang, Canisiusweg 125,
A-6064 Innsbruck- Rum (AT)
Erfinder: Beinsteiner, Johannes, Vill 40 V, A-6080
Innsbruck (AT)

(74) Vertreter: Riebling, Peter, Dr.- Ing., Patentanwälte
Dr.- Ing., Dipl.- Ing., Ing.(grad.) Günter Riebling
Dr.- Ing., Dipl.- Ing. Peter Riebling Rennerle 10
Postfach 3160, D-8990 Lindau (DE)

**Beschreibung**

Die Erfindung betrifft ein Verfahren zur Gewinnung von Cellulose unter Abtrennung von Hemicellulose und Lignin durch Behandlung zerkleinerter pflanzlicher Biomasse mit reinem Wasser in flüssigem Zustand bei bestimmten erhöhten Temperaturen und Drücken.

Sie betrifft ferner ein Verfahren zur Gewinnung von einfachen Zuckern und löslichen Ligninen durch Behandlung zerkleinerter pflanzlicher Biomasse mit reinem Wasser in flüssigem Zustand bei bestimmten erhöhten Temperaturen und Drücken.

Diese Verfahren werden mit dem Kurzausdruck "Selektive Hydrothermolyse" bezeichnet, der hier und im folgenden bedeutet, daß ein beliebiges, durch Photosynthese gebildetes Lignocellulosematerial (Holz, Stroh, Maiskolben, Bagasse etc.) mit Wasser in der flüssigen Phase bei für jeden Rohstoff exakt definierten Bedingungen hinsichtlich der Arbeitstemperatur, dem Arbeitsdruck und der Behandlungszeit derart aufgeschlossen wird, daß die im Rohstoff enthaltenen Produkte in gewünschter Form gewonnen werden können.

Für ein durch Photosynthese gebildetes, pflanzliches Lignocellulosematerial wird hier der Ausdruck "pflanzliche Biomasse" verwendet.

Es ist eine Reihe von Verfahren bekannt, mit denen pflanzliche Biomasse aufgeschlossen werden können, um bestimmte Produkte zu gewinnen.

Wird die Gewinnung von Cellulose, z. B. als Rohstoff für die Herstellung von Zellstoff, Papier, Kunstseide etc. angestrebt, sind Aufschlußverfahren unter Verwendung von Chemikalien bekannt, welche, je nach Aufschlußbedingungen, eine weitgehende Auflösung der Hauptbegleitsubstanzen der Cellulose bewirken. Die in gelöster Form abfallenden, abgetrennten Begleitsubstanzen werden aber in einer z.T. nicht verwertbaren Form erhalten und vernichtet.

Seit langem ist bekannt, daß die polysaccharidischen Komponenten der pflanzlichen Biomasse in einer oder mehreren Stufen mit Mineralsäuren in die sie aufbauenden einfachen Zucker zerlegt werden können. Es sind klassische Verfahren bekannt, bei welchen entweder eine konzentrierte Säure in der Kälte oder eine verdünnte Säure bei Temperaturen um 180°C in stehenden Gefäßen durch eine Feststoffsäule aus pflanzlichem Biomassematerial hindurchgeleitet werden. Es wird bei diesen Verfahren zwar ein Abtransport der gebildeten Zucker gewährleistet, die Verfahren aber arbeiten hinsichtlich der Rohmaterialbeschickung diskontinuierlich. Für das Befüllen und Entleeren der Behälter sowie das Anheizen und Abkühlen des Behälterinhaltes wird viel Zeit in Anspruch genommen. Weiters arbeiten die Verfahren mit z.T. großen Mengen an Säuren, die aufgearbeitet bzw. ersetzt werden müssen.

Durch die Anwendung der Säurehydrolyse bei hohen Temperaturen und mit sehr verdünnten Säuren konnten die erforderlichen, großen Reaktionsbehälter umgangen werden. Wesentliche Voraussetzungen für die Wirtschaftlichkeit von Säurehydrolyseverfahren sind die kontinuierliche Verfahrensführung mit kleinen Reaktionsbehältern und kurzen Verweilzeiten, sowie geringe Flottenverhältnisse und damit geringe Chemikalienzusätze und geringen Energieverbrauch. Um jedoch hohe Zuckerausbeuten erzielen zu können, muß neben der optimalen Verteilung des Katalysators in der Biomasse und der schnellen Anheizung des Rohmaterials auf die gewünschte Reaktionstemperatur gewährleistet werden, daß die entstehenden Zucker schnell aus der Reaktionszone abtransportiert werden. Das Zusammenwirken von geringen Flottenverhältnissen mit Reaktionstemperaturen über 200°C, bei Säurekonzentrationen zwischen 0,5 und 2 Prozent, stellt bei der Prozeßführung erhebliche Anforderungen an die mechanische Belastbarkeit der Verschlußorgane des Reaktionsgefäßes und die Korrosionsbeständigkeit der Konstruktionsmaterialien. Die Verfahren der Säurehydrolyse stellen darüberhinaus wenig spezifische Aufschlußmethoden dar, da die Polysaccharide im wesentlichen nur zu den einfachen Zuckern abgebaut werden. Diese liegen in einem Gemisch im Hydrolysat vor und sind nur schwer getrennt in reiner Form zu gewinnen. Ein besonderer Nachteil dieser Verfahren ist, daß ein stark denaturiertes, größtenteils unlösliches Lignin erhalten wird, das üblicherweise nur zur Energiegewinnung verbrannt werden kann.

Es sind weiters Verfahren bekannt, pflanzliche Biomasse mit Enzymsystemen, vornehmlich von Trichoderma viride, aufzuschließen. Diese Verfahren haben den Nachteil, daß praktisch nur vorbehandelte Rohmaterialien verwendet werden können. Lignocellulosische Pflanzenmaterialien verhindern nämlich durch ihren morphologischen Aufbau und die chemische Natur der Cellulosebegleitsubstanzen den Zutritt von Enzymen zu den abzubauenden Stoffen. Durch Verfahrensschritte wie Feinmahlung, Vorhydrolyse, mechanische Vorbehandlung bzw. teilweiser Delignifizierung kann die Zugänglichkeit für die Enzyme beträchtlich verbessert werden. Wesentliche Nachteile erwachsen aus diesen Verfahren durch die erforderlichen grossen Reaktionsvolumina sowie die langen Einwirkzeiten.

Es ist eine Anzahl von Verfahren bekannt, pflanzliche Biomasse durch Behandlung mit Dampf, Wasser und/oder Mischungen aus Wasser und organischen Lösungsmitteln bei Temperaturen zwischen 150°C und 240°C, z.T. in Verbindung mit einer mechanischen Bearbeitung, Defibrierung, explosionsartiger Druckentspannung, Extrusion etc. aufzuschließen. Diese bekannten Verfahren haben den Nachteil, daß nach dem eigentlichen Aufschlußprozeß die Produkte durch einen oder mehrere Verfahrensschritte, u.U. durch Zusatz von Chemikalien, von den Faserstoffen oder sonstigen Begleitstoffen abgetrennt werden müssen oder die als Aufschlußmittel eingesetzten Mischungen aus Wasser und organischen Lösungsmitteln aus Gründen der Wirtschaftlichkeit wieder aufgearbeitet werden müssen. Der Aufschluß von Lignin-reichen Biomassespecies gelingt darüberhinaus in der gewünschten Weise nur durch Zusatz von Chemikalien (z. B.

2

EP 0 098 490 B1

Säuren), wobei das Lignin nicht mehr in einer leicht abtrennbaren Form gewonnen werden kann.

Auch ist ein Verfahren bekannt, welches Holz, Rinde und andere Pflanzenmaterialien mit reinem Wasser abbaut (AT-A-263 661). Nach diesem Verfahren wird das Biomassematerial in mehreren aufeinanderfolgenden Stufen durch die Behandlung mit Wasser bei Temperaturen zwischen 140 und 350°C aufgeschlossen, wobei zwecks Abbau der Hemicellulose eine Arbeitstemperatur von 140 bis 200°C, vorzugsweise von 160 bis 180°C, gewählt wird, zwecks Abbau der Cellulose eine Arbeitstemperatur von 180 bis 280°C, vorzugsweise 200 bis 260°C, und für den im wesentlichen aus Lignin bestehenden Rückstand Aufschlußtemperaturen oberhalb von 250°C zur Anwendung kommen. Eine Bindung spezieller Temperaturen und Drücke an spezifische Masseverhältnisse von Biomasse zu Wasser und bestimmte Verweilzeiten von Wasser und Biomasse ist nach dieser Patentschrift nicht vorgesehen.

Dieses bekannte Verfahren weist mehrere Nachteile auf. Nach der verfahrensgemäßen Ausführung ist es lediglich möglich, durch die Wahl der entsprechenden Einwirktemperaturen und Einwirkzeiten die drei Hauptkomponenten des pflanzlichen Rohmaterials in z. B. drei Reaktionsstufen nacheinander abzubauen. Wird im Temperaturbereich zwischen 140 und 180°C aufgeschlossen, erhält man einen Rückstand, der im wesentlichn Cellulose und Lignin enthält. Wird dieser Rückstand im bevorzugten Temperaturbereich zwischen 200 und 260°C behandelt, verbleibt ein weiterer Rückstand, der im wesentlichen aus Lignin besteht. Nach diesem Verfahren ist es somit nicht möglich, pflanzliche Biomasse so aufzuschließen, daß durch die Abtrennung von Hemicellulose und Lignin ein Rückstand, erhalten wird, der im wesentlichen aus Cellulose besteht.

Es besteht somit ein Bedürfnis nach einem Verfahren, welches den Aufschluß von pflanzlicher Biomasse in einer Weise ermöglicht, daß durch die verfahrensmäßige Prozeßführung die Hemicellulose und das Lignin aufgelöst werden und ein Faserstoff erhalten wird, der im wesentlichen aus Cellulose besteht.

Bei dem oben angeführten, bekannten Verfahren handelt es sich nach den Literaturangaben um eine Hydrolysereaktion, die ihren Ausgang auf der Oberfläche der Faserstoffe nimmt. Dieses bekannte Verfahren weist jedoch mehrere Mängel auf. Es wird auf Grund der Reaktionsführung nur ein dem Wasser zugänglicher Teil der Faserstoffe abgebaut und erst dadurch der Zutritt zu neuen Hydrolysestellen im Faserstoff ermöglicht. Dieser Vorgang beansprucht naturgemäß eine entsprechende Zeitspanne, in der ein großer Teil des Hydrolysemediums Wasser die entsprechende Apparatur durchströmt, ohne daß es sich ausreichend mit gelösten Produkten anreichern kann. In der Folge werden Lösungen erhalten, die nur sehr geringe Konzentrationen z. B. an den gewünschten, einfachen Zuckern enthalten. Typische Werte für die aus der Cellulose entstehende Glucose sind 1 bis 2 Gramm Glucose pro Liter Lösung. Auch die pro Versuchsansatz aus Cellulose gebildete Glucosemenge ist bei diesem Verfahren nicht sehr hoch und bewegt sich im Bereich von 6 bis 9 Prozent.

Ein weiterer wesentlicher Nachteil liegt in der Tatsache, daß ein hoher Anteil (bis zu 40°C) der gelösten Produkte in Form suspendierter Polysaccharide vorliegt. Beabsichtigt man also zu einfachen Zuckern zu kommen, ist ein weiterer Verfahrensschritt, wie z. B. die saure Hydrolyse dieser Lösungen, erforderlich. Darüberhinaus sind die Lösungen mit den suspendierten Polysacchariden z.T. nur schwer filterbar, in gewissen Fällen unfiltrierbar und bleiben immer bis zu einem gewissen Grad trübe Lösungen.

Die angeführten Nachteile haben u.a. dazu geführt, daß sich bisher keine praktische Verwertung ergeben hat. Dennoch blieb das Bedürfnis bestehen, aus der in großer Menge verfügbaren pflanzlichen Biomasse, sowie deren Abfall-, Rest- und Nebenprodukten, mit einem neuen Verfahren, in hoher Ausbeute und mit wirtschaftlich vertretbaren Konzentrationen der abfließenden Lösungen einfache Zucker zu gewinnen.

Ferner ist ein Verfahren zur kontinuierlichen Herstellung von konzentrierten wäßrigen Xyloselösungen aus Hemicelluloseenthaltenden pflanzlichen Rohstoffen durch ein- bis dreistündige Behandlung mit Wasser unter Druck bei erhöhten Temperaturen bekannt, bei dem Verhältnisse von Biomasse zu Wasser von 3 : 1 bis 5 : 1 angewendet wurden. Diese, von den erfindungsgemäß vorgeschriebenen Verhältnissen völlig abweichenden Maßnahmen können nicht zu der gewünschten selektiven Verfahrensweise führen.

Aufgabe der Erfindung ist die Ausbildung eines Verfahrens zur Behandlung zerkleinerter pflanzlicher Biomasse mit reinem Wasser, mit Hilfe dessen in selektiver Weise unter Abstimmung spezifischer Masseverhältnisse von Biomasse zu Wasser und Verhältnisse der Verweilzeiten von Biomasse zu Wasser ganz gezielte Produkte gewonnen werden können.

Gegenstand der Erfindung ist ein Verfahren zur Gewinnung von Cellulose unter Abtrennung von Hemicellulose und Lignin durch Behandlung zerkleinerter pflanzlicher Biomasse mit reinem Wasser in flüssigem Zustand in einem Druckgefäß bei Temperaturen von 140 bis 240°C und Drücken von 3,6 bis 100 bar, wobei bei einer Verweilzeit des Wassers von 10 bis 200 Sekunden und einer Verweilzeit der Biomasse von 100 bis 2000 Sekunden das Wasser die Biomasse durchsetzt und ein Masseverhältnis von Biomasse zu Wasser von 1 : 1 bis 1 : 10 eingehalten wird.

Ein weiterer Gegenstand der Erfindung ist ein Verfahren zur Gewinnung von einfachen Zuckern und löslichen Ligninen durch Behandlung zerkleinerter pflanzlicher Biomasse mit reinem Wasser in flüssigem Zustand in einem Druckgefäß bei Temperaturen von 240 bis 340°C und Drücken von 34 bis 180 bar, wobei bei einer Verweilzeit des Wassers von 10 bis 200 Sekunden und einer Verweilzeit der Biomasse von 100 bis 2000 Sekunden das Wasser die Biomasse durchsetzt und ein Masseverhältnis von Biomasse zu Wasser von 1 : 1 bis 1 : 10 eingehalten wird.

Zur Durchführung des erfindungsgemäßen Verfahrens wird das lignocellulosische Pflanzenmaterial in zerkleinertem Zustand, in einem bevorzugt im Bereich der Fasersättigung befeuchteten Zustand,

3

diskontinuierlich oder kontinuierlich in ein Druckgefäß eingefördert, danach das Biomassematerial mit Wasser in flüssigem Zustand unter Einstellung eines Massenverhältnisses zwischen pflanzlicher Biomasse und Wasser von 1 : 1 bis 1 : 10, bevorzugt von 1 : 1,1 bis 1 : 3 bei Temperaturen von 140 bis 240°C und einem Druck zwischen 3,6 und 100 bar zur Gewinnung von Cellulose oder bei Temperaturen von 240 bis 340°C und einem Druck zwischen 34 und 180 bar zur Gewinnung von einfachen Zuckern und löslichen Ligninen im Quer-, Gleich- oder Gegenstrom durchströmt und die Verweilzeit des Wassers im Druckgefäß zwischen 10 und 200 Sekunden, bevorzugt zwischen 40 und 80 Sekunden, die Verweilzeit des Biomassematerials im Druckgefäß zwischen 100 und 2000 Sekunden, bevorzugt zwischen 300 und 900 Sekunden eingestellt.

Die bei den verfahrensmäßig definierten Bedingungen aufgelösten Biomasseprodukte der Hemicellulosefraktion und der Ligninfraktion werden mit dem durchgeleiteten Wasser von den Faserstoffen abgetrennt, mit dem Wasser aus dem Druckgefäß transportiert und in Form einer Lösung gewonnen.

Die verbleibenden ungelösten Faserstoffe werden diskontinuierlich oder kontinuierlich nach der bevorzugten Verweilzeit aus dem Druckgefäß ausgeschleust und gewonnen.

Die bei den verfahrensmäßig definierten Bedingungen aufgelösten Produkte der Polysaccharide (einfache und höhere Zucker) werden von den unlöslichen Biomasseanteilen abgetrennt und mit dem durchgeleiteten Wasser aus dem Druckgefäß transportiert und gewonnen.

Für die Durchführung des Verfahrens wird eine Einrichtung verwendet, deren Grundausstattung aus einem Rohrreaktor mit starren oder beweglichen Einbauten und aus - gegen die im Druckgefäß herrschenden Bedingungen - beständigen Eintrags- und Austragsvorrichtungen besteht.

Durch das Verfahren der Erfindung wird gewährleistet, daß eine vollständige Abtrennung der gelösten Biomasseprodukte von den Faserstoffen erfolgt.

Gemäß einer vorteilhaften Ausführungsform wird der Faserstoff nach dem Ausschleusen aus dem Druckgefäß durch Waschen mit Wasser oder niederen Alkoholen oder niederen Ketonen sowie alkalischen wäßrigen Lösungen von anhaftenden organischen Verbindungen befreit.

Der zerteilte Zustand des pflanzlichen Biomassematerials ist dadurch gekennzeichnet, daß eine Dimension eines Biomassepartikels 0,5 bis 2,5 mm, bevorzugt 0,7 bis 1,3 mm nicht übersteigt. Dies kann bei Sägespänen, Sägemehl und auch bei z. B. gehäckseltem Stroh leicht erreicht werden.

Wird die Biomasse gemäß Anspruch 12 bei Temperaturen von 140 bis 160°C behandelt, so wird ein von Hemicellulose im wesentlichen freier Faserstoff mit verringertem Ligningehalt gewonnen, dessen Cellulose einen hohen durchschnittlichen Polymerisationsgrad aufweist.

Bei Behandlung der Biomasse gemäß Anspruch 13 bei Temperaturen von 160 bis 200°C wird ein Faserstoff gewonnen, der im wesentlichen frei von Hemicellulose ist, einen deutlich verringerten Ligninanteil aufweist und dessen Cellulose einen deutlich verringerten durchschnittlichen Polymerisationsgrad aufweist.

Biomasse, die gemäß Anspruch 14 bei Temperaturen von 200 bis 240°C behandelt wird, ergibt einen Faserstoff, der im wesentlichen frei von Hemicellulose und frei von Lignin ist und dessen Cellulose einen stark verringerten durchschnittlichen Polymerisationsgrad aufweist.

Eine Behandlung der Biomasse gemäß den Ansprüchen 15 und 16 bei Temperaturen von 280 bis 320°C, insbesondere 290 bis 320°C, liefert in hoher Ausbeute einfache Zucker aus den Polysacchariden der Biomasse.

Die erhaltenen Faserstoffe werden in an sich bekannter Weise von den Begleitstoffen befreit und die Cellulose in reiner Form gewonnen.

Die bei den erfindungsgemäßen Bedingungen gewonnenen Abbaulösungen können nach an sich bekannten Methoden aufgearbeitet und die Inhaltsstoffe gewonnen werden.

Die erfindungsgemäß erhaltenen löslichen Produkte mit Saccharidcharakter können für die Herstellung von oberflächenaktiven Substanzen eingesetzt werden.

Die gemäß der Erfindung gewonnenen Zucker können in bekannter Weise zu Zuckeralkoholen reduziert oder ggf. zu Äthanol verarbeitet werden.

Der erfindungsgemäß gewonnene Faserstoff zeichnet sich dadurch aus, daß das bei einer Behandlungstemperatur zwischen 140 und 160°C und einer Wasserverweilzeit von 40 bis 80 Sekunden erhaltene Produkt nur mehr geringe Anteile an Hemicellulose, überraschender Weise aber auch wesentlich verringerte Anteile an Lignin, jedoch noch die ganze ursprünglich vorhandene Cellulose in einer chemisch unveränderten Form enthält. Es ist äußerst überraschend, daß bei Erhöhung der Behandlungstemperatur das an sich chemisch resistentere Lignin in erhöhtem Maße in Lösung geht, ohne daß wesentliche Anteile der Cellulose löslich werden. Es ist weiterhin überraschend, daß man bei Durchführung des erfindungsgemäßen Verfahrens bei konstanten Wasserverweilzeiten von 45 Sekunden bei einer Behandlungstemperatur von 200°C einen Faserstoff erhält, der gegenüber dem Produkt bei einer Behandlungstemperatur von 180°C nur noch die Hälfte des Ligninanteils besitzt. Dieser Umstand ermöglicht die Durchführung des erfindungsgemäßen Verfahrens in überaus selektiver Weise in bezug auf die chemische Zusammensetzung des gewonnenen Faserstoffes. Überraschend ist auch, daß der durchschnittliche Polymerisationsgrad der im Faserstoff enthaltendenen Cellulose in einem sehr weiten Bereich und sehr exakt ausschließlich durch die Wasserverweilzeit und die Behandlungstemperatur gesteuert werden kann. Dieser Effekt ermöglicht die Gewinnung eines Faserstoffes mit einer Cellulose, die für gezielte Zwecke verwertet werden kann. Dies sind im besonderen für Produkte der Temperaturstufe von 140 bis 180°C die Zellstoff- und Papierherstellung, für Produkte der Temperaturstufe 180 bis 200°C die Herstellung von Cellulosederivaten wie z. B. Kunstseide und für Produkte der Temperaturstufe 200 bis 240°C die Verwendung als Rauhfutter für Wiederkäuer oder als Rohmaterial für enzymatisch und sauer katalysierte Hydrolyseverfahren oder das erfindungsgemäß

4

beschriebene Verfahren der selektiven Hydrothermolyse bei Temperatur von 240 - 340°C. In ähnlicher Weise wie für die Faserstoffe kann das erfindungsgemäße Verfahren auch für die gewonnen Abbauprodukte der Hemicellulose und des Lignins selektiv durchgeführt werden. Es können dabei bevorzugt bei Behandlungstemperaturen von 140 bis 180°C die aus der Hemicellulosefraktion stammenden Produkte in Form einer Lösung gewonnen werden. Diese Lösungen enthalten nur wenig Lignin. Im selben Ausmaß wie der Ligningehalt der Faserstoffe bei der Durchführung des erfindungsgemäßen Verfahrens abnimmt, steigt der Ligningehalt in den abfließenden Lösungen. Zusätzlich zur Menge der Abbauprodukte in den abfließenden Lösungen kann durch die Behandlungstemperatur und die Verweilzeit des Wassers im Druckgefäß die chemische Natur der gewonnenen Produkte gesteuert werden. Bei den niederen Behandlungstemperaturen (um 160°C) werden Hemicelluloseprodukte und Lignin-Kohlenhydrat-Komplexe in bevorzugt höherer Form erhalten, während bei Temperaturen um 200°C größtenteils kohlehydratfreie, lösliche Lignine neben höheren und einfachen Zuckern in den abfließenden Lösungen auftreten.

Aus den bei den gegebenen Bedingungen abfließenden Lösungen können die Produkte nach an sich auf dem Gebiet der Zuckerchemie bekannten Methoden der Isolierung und Reinigung erhalten werden. Lignine und z. T. Lignin-Kohlehydratkomplexe lassen sich vorteilhaft durch Lösungsmittelextraktion gewinnen.

Dabei zeigen die Produkte der Hemicellulosefraktion nach ihrer Abtrennung von Lignin-oder sonstigen Verunreinigungsstoffen oberflächenaktive Eigenschaften, welche durch weitere chemische Umsetzung in an sich bekannter Weise (Veresterung, Verätherung etc.) verstärkt oder in gewünschter Weise modifiziert werden können.

Wird die Darstellung von einfachen Zuckern in den Lösungen mit höher molekularen Produkten angestrebt, so eignen sich die neutrale Nachhydrolyse, bevorzugt jedoch die Hydrolyse mit Säuren der Normalität 0,001 bis 0,1 bei Behandlungstemperaturen zwischen 160 bis 250°C. Es werden die, den in Betracht kommenden Polysaccharidanteil aufbauenden, einfachen Zucker in guter Ausbeute erhalten und das Lignin fällt in einer flockigen, leicht abtrennbaren, in organischen Lösungsmitteln löslichen Form an.

Für die direkte Darstellung von einfachen Zuckern zeichnet sich das erfindungsgemässe Verfahren besonders dadurch aus, daß ein Effekt ausgenutzt wird, der erst ab einer gewissen Temperatur auftritt und für den Fachmann nicht zu erwarten war. Während die Hydrolysereaktion im Temperaturbereich zwischen 140 und 260°C im wesentlichen eine Oberflächenreaktion ist, ändern sich die Verhältnisse über 280°C sprunghaft. Durch die hohe Temperatur und den hohen Druck löst sich das Biomassematerial fast vollständig innerhalb von einigen Sekunden zu einem homogenen Gemisch von Sacchariden und Ligninen auf. Diese Verbindungen liegen in einem höhermolekularen, aber gelösten Zustand vor und können daher mit sehr großer Geschwindigkeit zu den einfachen Verbindungen umgesetzt werden. Die global beobachtete Reaktionsgeschwindigkeit von z. B. "Glucosebildung aus Cellulose" wird dadurch außerordentlich stark erhöht. Im Zusammenhang damit erhält man stark erhöhte Zuckerkonzentration in der ablaufenden Lösung und hohe Zuckerausbeuten. Diese Vorteile werden durch das unmittelbare Aufeinanderfolgen von zwei Reaktionsschritten in ein- und demselbem Reaktionsgefäss erhalten, nämlich der Aufbereitungsreaktion (Auflösung der morphologischen Struktur der Biomasse) und der Hydrolysereaktion. Die Erfordernis einer geeigneten Vorbehandlungsmethode für zu Hydrolysezwecken eingesetzte Biomassenmaterialien wird in der entsprechenden Fachliteratur stark betont. Versuchsansätze wie chemische (mit Säuren und Alkalien) und physikalische (Bestrahlung mit Gammastrahlung und Feinmahlung) Vorbehandlungen zeigen bisher kaum Erfolgsaussichten, da weitere Verfahrensschritte einzuführen und Hilfsstoffe sowie -apparaturen erforderlich sind.

Für die vorliegende Erfindung werden solche Zusatzeinrichtungen und Hilfsstoffe jedoch nicht benötigt. Darüberhinaus weist das Verfahren auch in Bezug auf die Hydrolysereaktion den Vorteil auf, ohne Säuren oder Enzyme einfache Zucker in hoher Ausbeute zu liefern. Besonders vorteilhaft kann das erfindungsgemässe Verfahren durchgeführt werden, wenn zur Hydrolyse Faserstoffe eingesetzt werden, die im Temperaturbereich zwischen 140 und 240°C mit dem erfindungsgemäßen Verfahren erhalten wurden. Durch gezielte Vorbehandlung kann die Zuckerausbeute stark erhöht werden, wie unter anderem dem Ausführungsbeispiel 2 zu entnehmen ist.

Zur Veranschaulichung der Erfindung werden die folgenden Zeichnungen angefügt, in denen darstellen:

Abb. 1    eine Schemazeichnung eines zur Durchführung des erfindungsgemäßen Verfahrens geeigneten Druckgefäßes mit Ein- und Austrageeinheiten,
Abb. 2    eine graphische Darstellung der Bildungsrate von Xylose aus verfahrensmäßig gewonnenen Abbaulösungen mittels saurer Nachhydrolyse

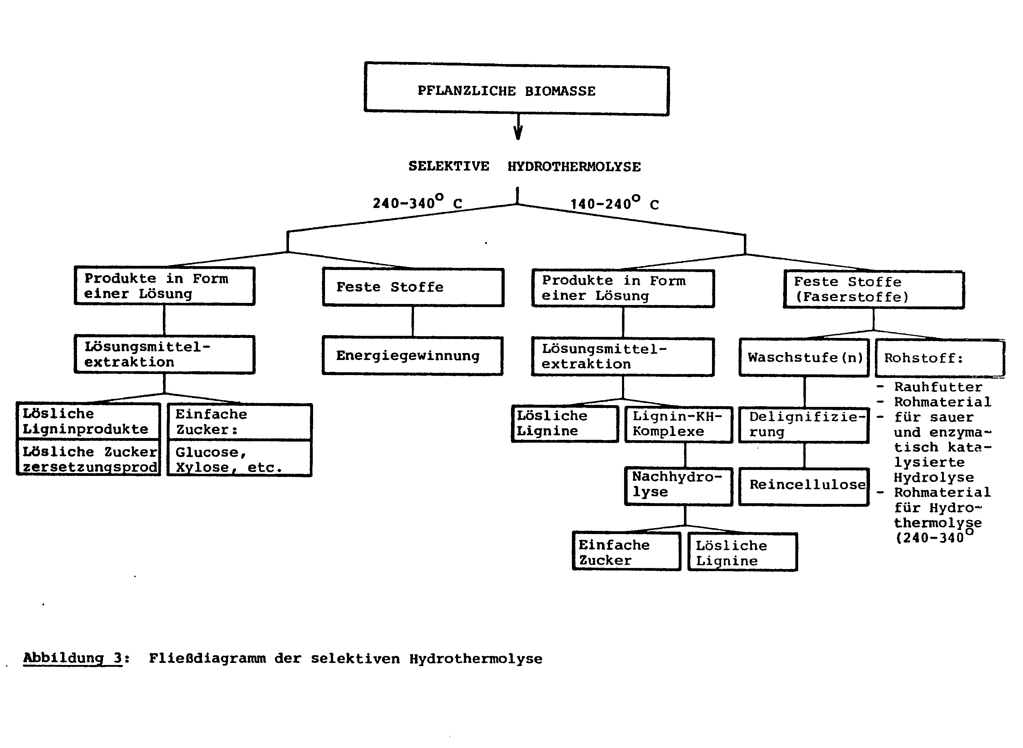

Abb. 3    ein Fließdiagramm der selektiven Hydrothermolyse

Die Bedingungen für die selektive Hydrothermolyse von Biomasse wurden anhand von charakteristischen Vertretern von Ein- und Mehrjahrespflanzen sowie von Standardcellulose (Filterpapier) bestimmt. Für das erfindungsgemäße Verfahren können prinzipiell alle pflanzlichen Biomassematerialien eingesetzt werden, es sind hiezu die optimalen Bedingungen vom Fachmann durch einfache Versuche zu ermitteln.

**Ausführungsbeispiele**

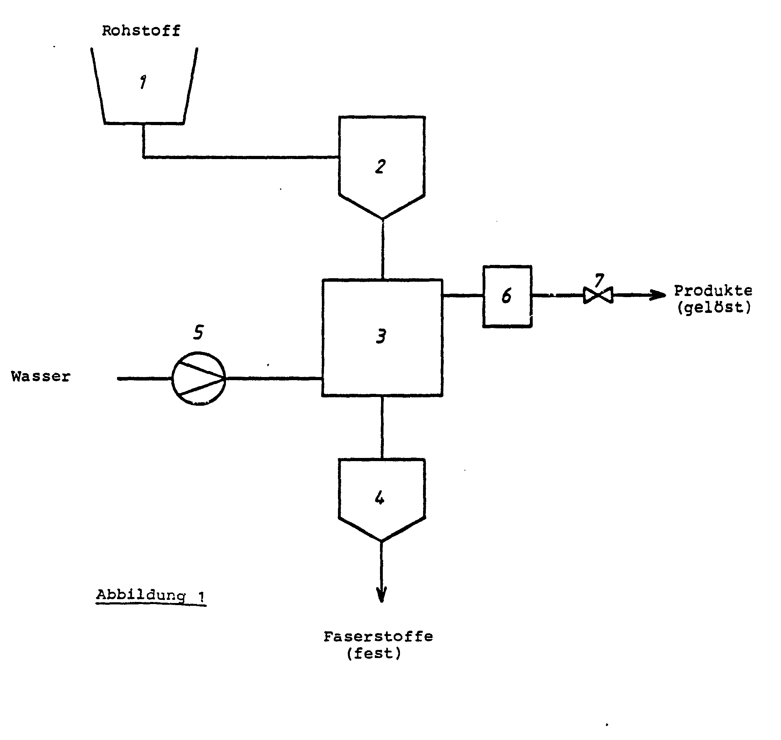

Die Vorrichtung ist in der Abb. 1 dargestellt und wie folgt aufgebaut: Biomassevorratsbehälter (1), der nach Bedarf Einbauten für die Vorbehandlung des Rohstoffes aufweisen kann, Vorrichtung (2) zur Einförderung von Biomasse in das Druckgefäß, Druckgefäß (3) mit starren oder beweglichen Einbauten für die Abtrennung der gelösten Produkte von den Faserstoffen, Austragevorrichtung (4) für die Faserstoffe, Hochdruckwasserpumpe (5), Kühler (6) und Drosselventil (7).

**Beispiel 1:**

Für die Durchführung des erfindungsgemäßen Verfahrens wurden luftgetrocknete Holzschnitzel mit einer durchschnittlichen Größe von 8 x 8 x 1 mm, bzw. gehäckseltes Stroh nach paralleler Bestimmung des Feuchtigkeitsgehaltes exakt eingewogen und in Druckgefäßen der Größen 6 und 1200 cm³ mit reinem, luftgesättigtem Wasser in der flüssigen Phase bei den in der Tabelle 1 angegebenen Bedingungen hinsichtlich Temperatur und Wasserweilzeit behandelt. Das Wasser durchläuft das Biomassematerial im Druckgefäß und verläßt, angereichert mit den Abbauprodukten den Reaktionsraum, wird über einen Kühler auf Temperaturen unter 100°C abgekühlt und wird nach der Druckentspannung aufgefangen. Von den Abbaulösungen wurden aliquote Mengen zur Trockne eingedampft und der Feststoffgehalt gravimetrisch ermittelt. Die chemische Zusammensetzung der Faserstoffe und die durchschnittlichen Polymerisationsgrade der im Faserstoff enthaltenen Cellulose wurden nach den in der Literatur beschriebenen, klassischen Methoden bestimmt. Ergebnisse für das Ausführungsbeispiel 1 für Pappelholz sind in den Tabellen 1 und 2 angeführt.

Bei Verwendung von anderen Biomassematerialien werden die charakterischen Ergebnisse des erfindungsgemäßen Verfahrens leicht erreicht. Es werden jedoch in Abhängigkeit vom verwendeten Rohmaterial im direkten Vergleich unterschiedliche Abbauraten erhalten. Dies ist durch die bereits im Ausgangsstoff vorliegende unterschiedliche Zusammensetzung bezüglich der Holzhauptkomponenten zu erklären. Die Tabelle 3 zeigt z. B. die Substanzwerte, die bei der selektiven Hydrothermolyse von Fichten-und Pappelholz bei 200°C erhalten wurden, dargestellt im Vergleich zu unbehandelten Holzproben. Die hier verdeutlichten, rohstoffbedingten Unterschiede können vom Fachmann durch Anpassung der Verfahrensbedingungen an den jeweiligen Rohstoff berücksichtigt werden, was insbesondere durch Probennahme oder durch einen Vorversuch vor Durchführung des Verfahrens gemäß der Erfindung festgestellt werden kann. In vielen Fällen lassen sich die Behandlungsbedingungen auch durch einen direkten Vergleich der chemischen Zusammensetzung des betreffenden Rohstoffes mit einem Standardbiomassematerial ermitteln. Unterscheiden sich die Analysenwerte für die pflanzlichen Biomassematerialien nicht wesentlich, weisen die erfindungsgemäßen Produkte sehr ähnliche Zusammensetzung auf (Tabelle 4).

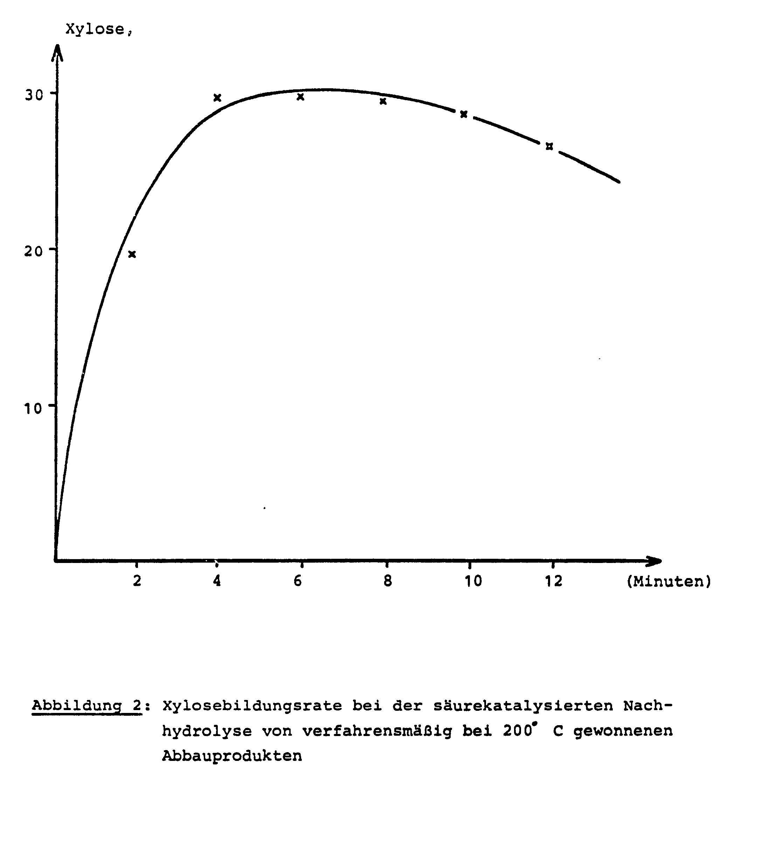

Für die Gewinnung von einfachen Zuckern und löslichem Lignin wurden die gewonnenen gelösten Abbauprodukte mit verdünnten Säuren in Stahlautoklaven hydrolysiert. Im Temperaturbereich zwischen 140 und 240°C werden bei der Verwendung von Mineralsäuren der Normalität 0,001 bis 0,1 die einfachen Zucker in guter Ausbeute erhalten. Die in den Lösungen als freie Bruchstücke oder als Komplexe mit Kohlehydraten vorliegenden Lignine gehen bei dieser Behandlung in wasserunlösliche, flockige, leicht abtrennbare Stoffe über, die löslich sind in den meisten organischen Lösungsmitteln. In der Abb. 2 ist die Bildungsrate von Xylose bei der Nachhydrolyse einer durch selektive Hydrothermolyse bei 200°C gewonnenen Abbaulösung in Abhängigkeit von der Behandlungszeit dargestellt.

Die in freier Form vorliegenden Ligninbruchstücke in den Abbaulösungen lassen sich durch einfache Lösungsmittelextraktion gewinnen.

**Beispiel 2:**

Die Vorrichtung zur Durchführung des erfindungsgemässen Verfahrens ist im Ausführungsbeispiel Nr. 1 beschrieben. Für die Durchführung des erfindungsgemässen Verfahrens wurden luftgetrocknete Holzschnitzel mit einer durchschnittlichen Größe von 8 x 8 x 1 mm, bzw. gehäckseltes Stroh, nach paralleler Bestimmung des Feuchtigkeitsgehaltes exakt eingewogen und in einem Druckgefäss der Größe von 10 cm³ mit reinem, luftgesättigtem Wasser in der flüssigen Phase bei den in der Tabelle 5 angegebenen Bedingungen hinsichtlich Temperatur und Wasserverweilzeit behandel.

Filterpapier diente als Referenzmaterial für Cellulose. Das Wasser durchläuft das Biomassematerial im Druckgefäss und verläßt, angereichert mit den gewünschten Reaktionsprodukten, das Druckgefäß, wird über einen Kühler geleitet, wo die Temperatur auf unter 100°C gebracht und nach der Druckentspannung aufgefangen wird. Die in der Kälte ausfallenden Stoffe setzen sich sehr schnell ab, so daß eine klare, gelb bis hellbraun gefärbte Lösung erhalten wird. Von den Abbaulösungen werden aliquote Mengen zur Trockne eingedampft und der Feststoffgehalt gravimetrisch bestimmt. Die Zucker in den Lösungen werden mit der Hochdruckflüssigkeitschromatographie-Methode bestimmt. Typische Ergebnisse für einige Biomassevertreter sind in der Tabelle 5 angegeben.

**Tabelle 1**: Zusammensetzung der Faser nach selektiver Hydrothermolyse

| Behandlungstemperatur °C | 160 | 180 | | 200 | | 220 | | 240 | |
|---|---|---|---|---|---|---|---|---|---|
| Cellulose, % | 44,9 | 42,2 | 40,8 | 38,6 | 39,5 | 30,7 | 34,4 | 22,1 | 25,6 |
| Hemicellulose, % | 6,2 | 2,6 | 3,8 | 2,7 | 3,0 | 3,7 | 3,8 | 1,0 | 3,2 |
| Lignin, % | 10,6 | 9,1 | 11,4 | 7,7 | 5,8 | 5,0 | 5,0 | 6,9 | 5,2 |
| Benzol-Alkohol-Extrakt, % | 0,3 | 2,5 | 2,7 | 1,8 | 2,0 | 2,1 | 3,9 | 2,2 | 1,5 |
| Gesamtmente der Faserstoffe, % | 62,0 | 56,4 | 58,7 | 50,8 | 50,3 | 41,5 | 47,1 | 32,2 | 35,5 |
| Wasserverweilzeit im Druck-gefäß, Sekunden | 70 | 70 | 45 | 70 | 45 | 70 | 45 | 70 | 45 |
| Durchschnittlicher Polymerisationsgrad der Cellulose im Faserstoff | 1283 | 739 | | 536 | | 228 | | 186 | |

**Tabelle 2**: Abbauraten bei der Hydrothermolyse, dargestellt bezüglich der gelösten Produkte

| Behandlungstemperatur | 160°C | 180°C | | 200°C | | 220°C | | 250°C | |
|---|---|---|---|---|---|---|---|---|---|
| Summe der gelösten Produkte, Trockengewicht in Prozent der Einwaage | 37,0 | 42,0 | 40,7 | 48,2 | 50,3 | 53,7 | 48,1 | 56,0 | 56,0 |
| Eindampfverluste, % Einwaage | 1,0 | 1,0 | 0,6 | 1,1 | -0,7 | 4,7 | 4,8 | 11,9 | 8,5 |
| Wasserverweilzeit in Sekunden | 70 | 70 | 45 | 70 | 45 | 70 | 45 | 70 | 45 |

**Tabelle 3**: Vergleich der Hemicellulosegehalte von unbehandelten Pappel- und Fichtenhölzern mit dem Feststoffgehalt in den hydrothermalen Abbaulösungen

| | Pappelholz | Fichtenholz | Abbautemperatur | Pappelholz | Fichtenholz |
|---|---|---|---|---|---|
| | unbehandelt | | °C | Hydrothermolyse | |
| | % der Einwaage | | | % der Einwaage | |
| Hemicellulose | 35,9 | 27,7 | 200 | 45,5 | 35,0 |

**Tabelle 4**: Chemische Zusammensetzung von unbehandeltem Pappelholz und Weizenstroh sowie der entsprechenden Rückstände nach der Hydrothermolyse bei 200°C

| | Pappelholz | Stroh | Rückstand nach der Hydrothermolyse bei 200°C | |
|---|---|---|---|---|
| | unbehandelt | unbehandelt | Pappholz | Stroh |
| | % Einwaage | % Einwaage | % Rückstand | % Rückstand |
| Cellulose | 45,4 | 46,5 | 84,1 | 83,1 |
| Hemicellulose | 35,9 | 35,6 | 4,5 | 5,1 |
| Lignin | 17,2 | 16,6 | 11,0 | 10,6 |
| Benzol-Alkohol-Extrakt | 1,4 | 1,3 | 0,5 | 1,2 |

**Tabelle 5**: Verfahrensmäßige Bedingungen und Zuckerausbeuten in Abhängigkeit von der Biomasseart

| Art des Biomasse-materials | Feuchtege-halt in Prozent | Verhältnis Biomasse- zu Wasserver-weilzeit | Druck bar | Temperatur °C | Zuckerkonzentra-tion in Gramm pro Liter der abflies-senden Lösung | Gesamtzuk-kerausbeute % der gelö-sten Menge | Maximale Verzuk-kerungsrate in einer Fraktion |
|---|---|---|---|---|---|---|---|
| **Reincellulose** | | | | | | | |
| 1. Filterpapier | 7,3 | 6 : 1 | 140 | 295 | Glucose: 41,4 | 45,1 | 61,9 |
| 2. Baumwolle | 4,6 | 9 : 1 | 140 | 295 | Glucose: 27,7 | 50,7 | 52,2 |
| **Pappelholz** | | | | | Xulose: 1,4 | | |
| 1. ohne Vorbeh. | 9,8 | 12 : 1 | 130 | 290 | Glucose: 11,8 | 24,2 | 50,0 |
| 2. verfahrensm. bei 200°C | 5,7 | 8 : 1 | 145 | 300 | Glucose: 36,0 | 36,0 | 44,2 |
| 3. vorbeh. (200°C) u. gebleicht | 8,3 | 8 : 1 | 150 | 305 | Glucose: 38,9 | 38,7 | 47,2 |

| | | | | | | | |
|---|---|---|---|---|---|---|---|
| 4. vorbehandelt bei 240°C Eucalyptusholz | 4,6 | 10 : 1 | 140 | 295 | Glucose: 29,8 | 41,4 | 58,8 |
| ohne Vorbeh. Weizenstroh | 7,1 | 9 : 1 | 140 | 295 | Glucose: 28,5 | 21,7 | 41,4 |
| 1. ohne Vorbeh. | 10,7 | 13 : 1 | 150 | 305 | Glucose: 2,3 | 8,2 | 27,8 |
| 2. vorbehandelt bei 200°C | 6,1 | 16 : 1 | 140 | 295 | Glucose: 11,5 | 19,4 | 25,5 |
| 3. vorbeh. bei 200°C und gebleicht | 7,6 | 10 : 1 | 140 | 295 | Glucose: 11,7 | 18,3 | 26,5 |

## Patentansprüche

1. Verfahren zur Gewinnung von Cellulose unter Abtrennung von Hemicellulose und Lignin durch Behandlung zerkleinerter pflanzlicher Biomasse mit reinem Wasser in flüssigem Zustand in einem Druckgefäß bei Temperaturen von 140 bis 240°C und Drücken von 3,6 bis 100 bar, wobei bei einer Verweilzeit des Wassers von 10 bis 200 Sekunden und einer Verweilzeit der Biomasse von 100 bis 2000 Sekunden das Wasser die Biomasse durchsetzt und ein Masseverhältnis von Biomasse zu Wasser von 1 : 1 bis 1 : 10 eingehalten wird.

2. Verfahren zur Gewinnung von einfachen Zuckern und löslichen Ligninen durch Behandlung zerkleinerter pflanzlicher Biomasse mit reinem Wasser in flüssigem Zustand in einem Druckgefäß bei Temperaturen von 240 bis 340°C und Drücken von 34 bis 180 bar, wobei bei einer Verweilzeit des Wassers von 10 bis 200 Sekunden und einer Verweilzeit der Biomasse von 100 bis 2000 Sekunden das Wasser die Biomasse durchsetzt und ein Masseverhältnis von Biomasse zu Wasser von 1 : 1 bis 1 : 10 eingehalten wird.

3. Verfahren nach Anspruch 1 oder 2, dadurch gekennzeichnet, daß eine Verweilzeit des Wassers von 40 bis 80 Sekunden angewendet wird.

4. Verfahren nach Anspruch 1 bis 3, dadurch gekennzeichnet, daß eine Verweilzeit der pflanzlichen Biomasse von 300 bis 900 Sekunden angewendet wird.

5. Verfahren nach Anspruch 1 bis 4, dadurch gekennzeichnet, daß ein Masseverhältnis von Biomasse zu Wasser von 1 : 1,1 bis 1 : 3 eingehalten wird.

6. Verfahren nach Anspruch 1 bis 5, dadurch gekennzeichnet, daß man die pflanzliche Biomasse in einem im Bereich der Fasersättigung befeuchteten Zustand in das Druckgefäß einfördert.

7. Verfahren nach Anspruch 1 bis 6, dadurch gekennzeichnet, daß das Wasser und die pflanzliche Biomasse das Druckgefäß kontinuierlich durchsetzen.

8. Verfahren nach Anspruch 7, dadurch gekennzeichnet, daß das Wasser und die pflanzliche Biomasse das Druckgefäß im Gegen-, Gleich- oder Kreuzstrom durchsetzen.

9. Verfahren nach Anspruch 1 oder 3 bis 8, dadurch, gekennzeichnet, daß man die erhaltenen abgebauten Hemicellulose-, Cellulose- und Ligninprodukte mit dem durchgeleiteten Wasser aus dem Reaktionsgefäß entfernt und in Form einer wäßrigen Lösung gewinnt.

10. Verfahren nach Anspruch 1 bis 9, dadurch gekennzeichnet, daß man die erhaltenen unlöslichen Faserstoffe und/oder Biomasseanteile diskontinuierlich oder kontinuierlich aus dem Druckgefäß entfernt.

11. Verfahren nach Anspruch 1 oder 3 bis 10, dadurch gekennzeichnet, daß man die gewonnenen Faserstoffe mit Wasser, niederen Alkoholen, niederen Ketonen, Mischungen von Wasser mit niederen Alkoholen oder niederen Ketonen und wäßrigen Alkalien behandelt.

12. Verfahren nach einem der Ansprüche 1 oder 3 bis 11, dadurch gekennzeichnet, daß die Biomasse bei Temperaturen von 140 bis 160°C behandelt wird.

13. Verfahren nach einem der Ansprüche 1 oder 3 bis 11, dadurch gekennzeichnet, daß die Biomasse bei Temperaturen von 160 bis 200°C behandelt wird.

14. Verfahren nach einem der Ansprüche 1 oder 3 bis 11, dadurch gekennzeichnet, daß die Biomasse bei Temperaturen von 200 bis 240°C behandelt wird.

15. Verfahren nach einem der Ansprüche 2 bis 8, dadurch gekennzeichnet, daß die Biomasse bei Temperaturen von 280 bis 320°C behandelt wird.

16. Verfahren nach einem der Ansprüche 2 bis 8, dadurch gekennzeichnet, daß die Biomasse bei Temperaturen von 290 bis 320°C behandelt wird.

17. Verfahren nach einem der Ansprüche 1 bis 16, dadurch gekennzeichnet, daß man die erhaltenen Faserstoffe in reiner oder unreiner Form einer sauren oder enzymatischen Hydrolyse oder einer in den Ansprüchen 15 oder 16 beschriebenen Behandlung unterwirft und die einfachen Zucker gewinnt.

18. Verfahren nach einem der Ansprüche 1 bis 17, dadurch gekennzeichnet, daß man die in den gewonnenen Lösungen enthaltenen höheren Zucker und Kohlehydrat-Lignin-Komplexe einer Nachhydrolyse mit Enzymen oder mit Säuren der Normalität 0,001 bis 0,1, bevorzugt 0,01 bis 0,05, bei Temperaturen zwischen 160 und 240°C unterwirft und die einfachen Zucker und das Lignin in einer leicht abtrennbaren Form gewinnt.

19. Verfahren nach einem der Ansprüche 1 bis 18, dadurch gekennzeichnet, daß man die von den Faserstoffen abgetrennten Lösungen mit organischen Lösungsmitteln extrahiert und die Ligninabbauprodukte

# EP 0 098 490 B1

gewinnt.

20. Vorrichtung zur Durchführung des Verfahrens nach den Ansprüchen 1 bis 19, <u>gekennzeichnet</u> durch einen Biomassevorratsbehälter (1), eine Vorrichtung (2) zur Einförderung von Biomasse in das Druckgefäß, ein als Rohrreaktor ausgebildetes Druckgefäß (3) mit starren oder beweglichen Einbauten, eine Austragsvorrichtung (4) für die Faserstoffe sowie Hochdruckwasserpumpe (5), Kühler (6) und Drosselventil (7).

## Claims

1. A cellulose production process with separation of hemicellulose and lignin by processing comminuted plant biomass with pure water in the fluid state within a pressure vessel at temperatures of 140 to 240°C and pressures from 3.6 to 100 bar, wherein the biomass is permeated with a water dwell period of 10 to 200 seconds and a biomass dwell period of 100 to 2000 seconds, and a weight ratio between biomass and water of 1 : 1 to 1 : 10 is maintained.

2. Process for production of simple sugars and lignin by processing comminuted plant biomass with pure water in the fluid state within a pressure vessel at temperatures of 240 to 340°C and pressures from 34 to 180 bar, wherein the water permeates the biomass and a weight ratio between biomass and water of 1 : 1 to 1 : 10 is maintained with a water dwell period of 10 to 200 seconds and a biomass dwell period of 100 to 2000 seconds.

3. Process according to claim 1 or 2, characterised in that a water dwell period of 40 to 80 seconds is applied.

4. Process according to claims 1 to 3, characterised in that a plant biomass dwell period of 300 to 900 seconds is applied.

5. Process according to claims 1 to 4, characterised in that a weight of ratio of biomass to water of 1 : 1.1 to 1: 3 is maintained.

6. Process according to claims 1 to 5, characterised in that the plant biomass is conveyed into the pressure vessel in a humidified state within the range of fibre saturation.

7. Process according to claims 1 to 6, characterised in that the water and the plant biomass pass continuously through the pressure vessel.

8. Process according to claim 7, characterised in that the water and the plant biomass pass through the pressure vessel in contradirectional, equidirectional or crossed flow.

9. Process according to claims 1 or 3 to 8, characterised in that the separated hemicellulose, cellulose and lignin products obtained are removed from the reaction vessel with the water passed through and are obtained in the form of an aqueous solution.

10. Process according to claims 1 to 9, characterised in that the insoluble fibrous substances and/or biomass constituents obtained are removed from the pressure vessel intermittently or continuously.

11. Process according to claims 1 or 3 to 10, characterised in that the fibrous substances obtained are treated with water, lower alcohols, lower ketones, mixtures of water with lower alcohols or lower ketones and aqueous alkalis.

12. Process according to one of claims 1 or 3 to 11, characterised in that the biomass is treated at temperatures of 140 to 160°C.

13. Process according to one of claims 1 or 3 to 11, characterised in that the biomass is treated at temperatures of 160 to 200°C.

14. Process according to one of claims 1 or 3 to 11, characterized in that the biomass is treated at temperatures of 200 to 240°C.

15. Process according to one of claims 2 to 8, characterized in that the biomass is treated at temperatures of 280 to 320°C.

16. Process according to one of claims 2 to 8, characterised in that the biomass is treated at temperatures of 290 to 320°C.

17. Process according to one of the claims 1 to 16 characterized in that the fibrous substances obtained are subjected in pure or impure form to an acid or enzymatic hydrolysis or to a treatment described in claims 15 or 16, and the simple sugars are obtained.

18. Process according to one of the claims 1 to 17, characterised in that the higher sugars and carbohydrate-lignin complexes contained in the solutions obtained are subjected to a post-hydrolysis with enzymes or acids with a normality of 0.001 to 0.1, preferably 0.01 to 0.05, at temperatures between 160 and 240°C and the simple sugars and the lignin is obtained in an easily separable form.

19. Process according to one of the claims 1 to 18, characterised in that the solutions separated from the fibrous substances are extracted with organic solvents and the lignin decomposition products recovered.

20. Device for carrying out the process according to claims 1 to 19, characterised by a biomass storage tank (1), a device (2) for conveying biomass into the pressure vessel, a pressure vessel (3) constructed as a tubular reactor and comprising fixed or movable inserts, an extractor device (4) for the fibrous substances, as as well as a high-pressure water pump (5), a cooling means (6) and a throttle valve (7).

9

## Revendications

1. Procédé d'obtention de cellulose avec séparation d'hémicellulose et de lignine, par traitement de biomasse végétale fragmentée par de l'eau pure à l'état fluide, dans un récipient sous pression, à des températures de 140 à 240°C et sous de pressions de 3,6 à 100 bars, où, pour un temps de séjour de l'eau de 10 à 200 secondes et un temps de séjour de la biomasse de 100 à 2000 secondes, l'eau traverse la biomasse, et un rapport pondéral de la biomasse à l'eau de 1 : 1 à 1 : 10 est maintenu.

2. Procédé d'obtention de sucres simples et de lignines solubles, par traitement de biomasse végétale fragmentée par de l'eau pure à l'état fluide, dans un récipient sous pression, à des températures de 240 à 340°C et sous des pressions de 34 à 180 bars, où, pour un temps de séjour de l'eau de 10 à 200 secondes et un temps de séjour de la biomasse de 100 à 2000 secondes, l'eau traverse la biomasse, et un rapport pondéral de la biomasse à l'eau de 1 : 1 à 1 : 10 est maintenu.

3. Procédé selon la revendication 1 ou 2, caractérisé par le fait qu'on utilise un temps de séjour de l'eau de 40 à 80 secondes.

4. Procédé selon l'une des revendications 1 à 3, caractérisé par le fait qu'on utilise un temps de séjour de la biomasse végétale de 300 à 900 secondes.

4. Procédé selon l'une des revendications 1 à 4, caractérisé par le fait qu'on maintient un rapport pondéral de la biomasse à l'eau de 1 : 1,1 à 1 : 3.

6. Procédé selon l'une des revendications 1 à 4, caractérisé par le fait qu'on introduit dans le récipient sous pression la biomasse végétale se trouvant dans un état d'humidité correspondant au domaine de saturation des fibres.

7. Procédé selon l'une de revendications 1 à 6, caractérisé par le fait que l'eau et la biomasse végétale traversent le récipient sous pression en continu.

8. Procédé selon la revendication 7, caractérisé par le fait que l'eau et la biomasse végétale traversent le récipient sous pression à contre-courant, à co-courant ou à courants croisés.

9. Procédé selon l'une de revendications 1 ou 3 à 8, caractérisé par le fait qu'on enlève du récipient de réaction les produits d'hémicellulose, de cellulose et de lignine dégradés obtenus, avec l'eau de circulation et qu'on les obtient sous la forme d'une solution aqueuse.

10. Procédé selon l'une des revendications 1 à 9, caractérisé par le fait qu'on enlève du récipient sous pression les matières fibreuses et/ou les fractions de biomasse, insolubles obtenues, de façon discontinue ou de façon continue.

11. Procédé selon l'une des revendications 1 ou 3 à 10, caractérisé par le fait qu'on traite les substances fibreuses obtenues par de l'eau, des alcools inférieurs, des cétones inférieurs, des mélanges d'eau avec des alcools inférieurs ou des cétones inférieures et des substances alcalines aqueuses.

12. Procédé selon l'une des revendications 1 ou 3 à 11, caractérisé par le fait qu'on traite la biomasse à des températures de 140 à 160°C.

13. Procédé selon l'une des revendications 1 ou 3 à 11, caractérisé par le fait qu'on traite la biomasse à des températures de 160 à 200°C.

14. Procédé selon l'une des revendications 1 ou 3 à 11, caractérisé par le fait qu'on traite la biomasse à des températures de 200 à 240°C.

14. Procédé selon l'une des revendications 2 à 8, caractérisé par le fait qu'on traite la biomasse à des températures de 280 à 320°C.

16. Procédé selon l'une de revendications 2 à 8, caractérisé par le fait qu'on traite la biomasse à des températures de 290 à 320°C.

17. Procédé selon l'une des revendications 1 à 16, caractérisé par le fait qu'on soumet les matières fibreuses obtenues, sous une forme pure ou impure, à une hydrolyse acide ou enzymatique ou à un traitement décrit aux revendications 14 ou 16, et que l'on obtient les sucres simples.

18. Procédé selon l'une de revendications 1 à 17, caractérisé par le fait qu'on soumet les sucres supérieurs et les complexes hydrate de carbone-lignine, contenus dans les solutions obtenues à une post-hydrolyse avec des enzymes ou avec de acides de normalité 0,001 à 0,1, de préférence, de 0,01 à 0,05, à des températures comprises entre 160 et 240°C, et que l'on obtient les sucres simples et la lignine sous une forme facilement séparable.

19. Procédé selon l'une des revendications 1 à 18, caractérisé par le fait qu'on extrait les solutions séparées des matières fibreuses par des solvants organiques, et que l'on obtient les produits de décomposition de la lignine.

20. Dispositif pour la mise en oeuvre du procédé tel que défini à l'une des revendications 1 à 19, caractérisé par un réservoir (1) de stockage de la biomasse, un dispositif (2) d'introduction de la biomasse dans le récipient sous pression, un récipient sous pression (3) réalisé sous la forme d'un réacteur tubulaire, avec des chicanes rigides ou mobiles, un dispositif d'évacuation (4) pour les matières fibreuses, de même que par une pompe à eau sous haute pression (4), un dispositif de refroidissement (6) et une soupape de réglage (7).

Rohstoff

Abbildung 1

Abbildung 2: Xylosebildungsrate bei der säurekatalysierten Nachhydrolyse von verfahrensmäßig bei 200° C gewonnenen
Abbauprodukten

EP 0 098 490 B1

```
┌─────────────────────────────┐
│     PFLANZLICHE BIOMASSE     │
└─────────────────────────────┘
                │
                ▼

        SELEKTIVE   HYDROTHERMOLYSE

  240-340° C                    140-240° C
```

| Produkte in Form einer Lösung | Feste Stoffe | Produkte in Form einer Lösung | Feste Stoffe (Faserstoffe) |
|---|---|---|---|
| Lösungsmittel-extraktion | Energiegewinnung | Lösungsmittel-extraktion | Waschstufe(n) / Rohstoff: |

Lösliche Ligninprodukte | Einfache Zucker:

Lösliche Zucker zersetzungsprod | Glucose, Xylose, etc.

Lösliche Lignine | Lignin-KH-Komplexe

Delignifizierung

Nachhydrolyse

Reincellulose

Einfache Zucker | Lösliche Lignine

Rohstoff:
- Rauhfutter
- Rohmaterial
- für sauer und enzymatisch katalysierte Hydrolyse
- Rohmaterial für Hydrothermolyse (240-340°

**Abbildung 3:** Fließdiagramm der selektiven Hydrothermolyse